# EUROPÄISCHE PATENTSCHRIFT

(11) **EP 0 780 262 B1**
(45) Veröffentlichungstag und Bekanntmachung des Hinweises auf die Patenterteilung: **30.06.1999**
(21) Anmeldenummer: 95120619.2
(22) Anmeldetag: 23.12.1995
(51) Int. Cl.: B60N 2/44

(54) **Vorrichtung zur Befestigung eines Stützelements an einem Drahtgitter**
Device for attaching a support element to a wire grating
Dispositif pour la fixation d'un élément de support à un grillage en fils

(43) Veröffentlichungstag der Anmeldung: 25.06.1997
(73) Patentinhaber: Schwarzbich, Jörg, D-33615 Bielefeld (DE)
(72) Erfinder: Schwarzbich, Jörg, D-33615 Bielefeld (DE)
(74) Vertreter: Wiebusch, Manfred

(56) Entgegenhaltungen:
- EP-A- 0 518 830
- EP-A- 0 537 839
- DE-A- 2 947 472
- DE-A- 4 405 495
- US-A- 5 217 278

## Beschreibung

Die Erfindung betrifft eine Vorrichtung zur Befestigung eines Stützelements an einem Drahtgitter eines Sitzes, mit Klemmnuten, in denen jeweils zumindest ein Draht des Drahtgitters verrastet sind (siehe z.B. die WO-A-95 19123, die dem übereinstimmenden Oberbegriff der Patentansprüche 1 und 2 zugrundeliegt).

Bei Sitzen, insbesondere bei Kraftfahrzeugsitzen, ist häufig innerhalb der Rückenlehne unter der Polsterung ein Stützelement in der Form einer sogenannten Lordosenstütze vorgesehen, das mit Hilfe einer Spannvorrichtung mehr oder weniger stark durchgewölbt werden kann, um dem Benutzer des Sitzes im Lendenwirbelbereich einen besseren Halt zu geben. Das Stützelement hat zumeist die Form einer länglichen Platte aus Kunststoff, die mit Hilfe eines Bowdenzuges in vertikaler Richtung auf Kompressionen beansprucht werden kann, so daß sie sich nach vom durchwölbt. Diese Platte ist an einem Drahtgitter festgeklemmt, das seinerseits mit Federn nachgiebig im Rahmen der Rückenlehne aufgehängt ist.

Bei einer einfachen Rastverbindung kann es leicht vorkommen, daß das Stützelement infolge mechanischer Beanspruchungen, etwa während der Montage des Sitzes oder aufgrund der bei der Durchwölbung auftretenden Zugkräfte von dem Drahtgitter abgelöst wird. Wenn man andererseits die Klemmkraft erhöht, um das Stützelement sicherer an dem Drahtgitter zu befestigen, so wird das Einrasten der Drähte in die Klemmnuten zunehmend schwieriger, so daß sich ein erhöhter Arbeitsaufwand beim Zusammenbau der Lordosenstütze ergibt.

Aufgabe der Erfindung ist es, eine Vorrichtung der eingangs genannten Art zu schaffen, die es einerseits gestattet, das Stützelement einfach und mit geringem Arbeitsaufwand an dem Drahtgitter zu verrasten und die andererseits eine hohe Stabilität aufweist, so daß das Stützelement nach Herstellen der Verrastung auch bei größerer mechanischer Beanspruchung nicht wieder von dem Drahtgitter abgerissen werden kann.

Diese Aufgabe wird erfindungsgemäß mit den in den kennzeichnenden Teilen der Patentansprüche 1 und 2 angegebenen Merkmalen gelöst.

Bei der vorgeschlagenen Lösung nimmt eine einzelne Klemmnut jeweils zwei Drähte des Drahtgitters auf. Die lichte Weite der Öffnung der Klemmnut ist kleiner als der zweifache Drahtdurchmesser.

Wenn das Stützelement am Drahtgitter befestigt werden soll, werden die beiden Drähte nacheinander in die Klemmnut eingedrückt. Der dabei auftretende Rastwiderstand ist verhältnismäßig gering und kann problemlos überwunden werden. Auf diese Weise wird eine einfache Montage ermöglicht.

Wenn das Stützelement einmal am Drahtgitter befestigt ist und ein Zug in einer zur Ebene des Drahtgitters senkrechten Richtung auf das Stützelement ausgeübt wird, so bewirkt dies eine Bewegung des Stützelements relativ zu beiden in der Klemmnut liegenden Drähten des Drahtgitters. Die beiden Drähte haben deshalb die Tendenz, gleichzeitig aus der verengten Öffnung der Klemmnut herauszutreten. Da die lichte Weite jedoch kleiner ist als der zweifache Drahtdurchmesser, wird ein Herausreißen der Drähte aus der Klemmnut zuverlässig verhindert. Auf diese Weise wird die gewünschte hohe Stabilität der Befestigung erreicht.

Wenn das Stützelement bei Reparaturarbeiten vom Drahtgitter abgelöst werden soll, so läßt sich die Befestigung einfach lösen, indem die beiden Drähte wieder nacheinander aus der Klemmnut herausgezogen werden.

Bei der Lösung nach Anspruch 2 ist im Inneren der Klemmnut eine elastische Zunge angeordnet, die vom Boden der Klemmnut ausgeht und in die verengte Öffnung derselben ragt. Die Klemmnut wird so in zwei Abteile unterteilt, die jeweils einen der Drähte aufnehmen. Wenn die Drähte nacheinander eingerastet oder aus der Klemmnut herausgezogen werden, kann die Zunge jeweils nach einer Seite ausweichen. Wenn dagegen ein Zug auf das Stützelement ausgeübt wird und die beiden Drähte die Tendenz haben, gleichzeitig aus der Öffnung der Klemmnut herauszutreten, so wird ein Ausweichen der Zunge verhindert, so daß sich die beiden Drähte fest in der Öffnung der Klemmnut verkeilen. Die Gesamtbreite der Öffnung der Klemmnut - von Wand zu Wand gemessen - kann in diesem Fall größer sein als der zweifache Drahtdurchmesser. Unter "lichter Weite" im Sinne der Erfindung ist in diesem Fall die Gesamtbreite der Öffnung abzüglich der Breite der Zunge zu verstehen.

Aus der o.g. WO-A-95 19123 ist eine Vorrichtung zur Befestigung eines Stützelements an einem Drahtgitter bekannt, bei der zwei Klemmnuten dicht nebeneinanderliegend in einem gemeinsamen Kunststoffteil ausgebildet sind, und je ein Draht in einer der Klemmnuten verrastet ist, deren lichte Weite kleiner als der jeweilige Drahtdurchmesser ist. Bei diesem Stand der Technik sind die beiden Klemmnuten jedoch anders als bei der oben beschriebenen Ausführungsform nicht durch eine elastische Zunge, sondern durch einen starren Steg voneinander getrennt. Beim Ein- und Ausrasten des Drahtes gibt nicht dieser Steg nach, sondern die diesem Steg gegenüberliegende Wand der Klemmnut. Obgleich die beiden Klemmnuten dicht nebeneinander liegen, verhalten sie sich deshalb wie zwei getrennte Klemmnuten und nicht wie eine einzige Klemmnut mit einer darin angeordneten Zunge. Die Wirkungen der oben beschriebenen bevorzugten Ausführungsform lassen sich mit dieser bekannten Anordnung nicht erreichen.

Vorteilhafte Weiterbildungen und Ausgestaltungen der Erfindung ergeben sich aus den Unteransprüchen.

Im folgenden wird ein bevorzugtes Ausführungsbeispiel der Erfindung anhand der Zeichnung näher erläutert.

Es zeigen:
- Fig. 1: eine Rückansicht einer Lordosenstütze;
- Fig. 2: einen vergrößerten Schnitt längs der Linie II-II in Figur 1;
- Fig. 3: einen Schnitt entsprechend Figur 2, jedoch in einem Zustand während des Herstellens oder Lösens der Rastverbindung; und
- Fig. 4: einen vergrößerten Schnitt längs der Linie IV-IV in Figur 1.

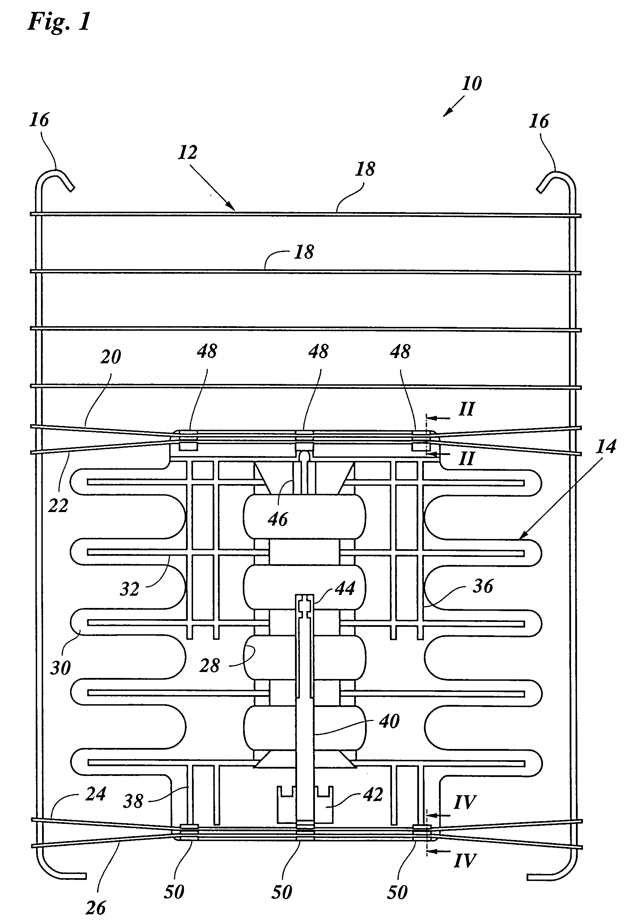

In Figur 1 ist eine Lordosenstütze 10 dargestellt, die ein Drahtgitter 12 aufweist, an dem ein Stützelement 14 lösbar befestigt ist.

Das Drahtgitter 12 wird an beiden Längsseiten durch vertikale, an den Enden umgebogene Metallstäbe 16 begrenzt, die durch sprossenartig angeordnete Drähte 18, 20, 22, 24, 26 miteinander verbunden sind. An den umgebogenen Enden der beiden Metallstäbe 16 ist jeweils eine nicht gezeigte Zugfeder eingehakt. Mit diesen Zugfedern ist die Lordosenstütze 10 so im Rahmen der Rückenlehne eines Kraftfahrzeugsitzes aufgehängt, daß das Stützelement 14 etwa in der Ebene der Rückenpolsterung liegt und dem Rücken des Benutzers zugewandt ist.

Bei dem Stützelement 14 handelt es sich um ein im wesentlichen plattenförmiges Kunststoff-Spritzteil, das in der Mitte mit Durchbrüchen 28 und an den seitlichen Rändern mit waagerecht abstehenden Fingern 30 versehen ist und im horizontalen Schnitt eine leicht konkave, der Körperanatomie angepaßte Form hat. Die Finger 30 sind jeweils auf der Rückseite durch Versteifungsrippen 32 versteift. Im Bereich des oberen und unteren Endes sind zusätzlich vertikale Versteifungsrippen 36 und 38 vorgesehen, während sich in einem mittleren Abschnitt des Stützelements keine vertikalen Versteifungsrippen befinden, so daß das Stützelement elastisch durchbiegbar ist.

Ein im wesentlichen vertikal verlaufender Hebel 40 ist mittig auf der Rückseite des Stützelements 14 angeordnet und an seinem unteren Ende in einem Lager 42 schwenkbar an dem Stützelement gelagert. Das obere Ende des Hebels 40 bildet eine Verankerungsstelle 44 für das Außenkabel eines nicht gezeigten Bowdenzuges. Eine Verankerungsstelle 46 für das zugehörige Innenkabel ist in der Nähe des oberen Randes des Stützelements 14 angeordnet. Mit Hilfe des Bowdenzuges kann folglich das Stützelement 14 in vertikaler Richtung auf Kompression beansprucht werden, so daß es sich in Richtung auf den Rücken des Benutzers durchwölbt.

Zur Befestigung des Stützelements 14 an dem Drahtgitter 12 sind drei Klemmstellen 48 längs des oberen Randes des Stützelements und drei Klemmstellen 50 längs des unteren Randes angeordnet. Mit den oberen Klemmstellen 48 ist das Stützelement an zwei Drähten 20, 22 des Drahtgitters festgeklemmt, und mit den unteren Klemmstellen 50 ist das Stützelement an zwei weiteren Drähten 24, 26 des Drahtgitters festgeklemmt.

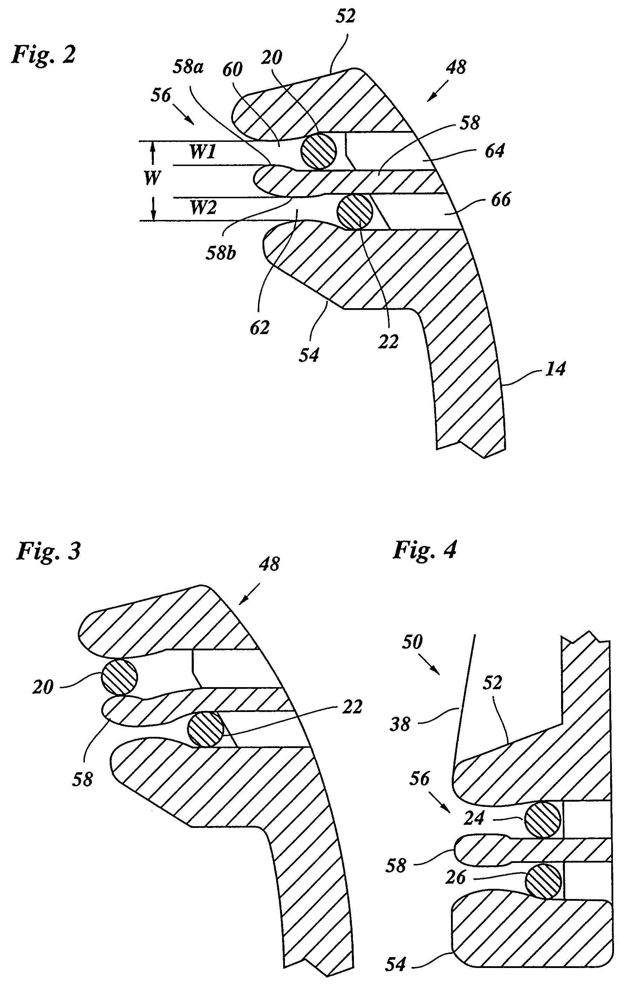

Der Aufbau der Klemmstellen 48 und 50 ist im einzelnen in Figuren 2 bis 4 dargestellt.

Wie in Figur 2 zu erkennen ist, ist der obere Rand des Stützelements 14 leicht zur Rückseite hin abgerundet. Die Klemmstelle 48 wird durch zwei parallel zueinander und zum oberen Rand des Stützelements verlaufende verformungssteife Rippen 52, 54 gebildet, die zur Rückseite des Stützelements vorspringen und eine Klemmnut 56 definieren. Die Rippen 52, 54 sind am freien Ende etwas verdickt, so daß die Klemmnut 56 eine verengte Öffnung mit der Breite W aufweist.

In der Klemmnut 56 ist eine parallel zu den Rippen 52, 54 vorspringende elastische Zunge 58 angeordnet, die Klemmnut 56 in zwei Schächte 60, 62 unterteilt, die jeweils einen der Drähte 20 und 22 aufnehmen. Die Zunge 58 ist am freien Ende etwas verdickt, so daß die Öffnung des Schachtes 60 auf die Breite W1 und die Öffnung des Schachtes 62 auf die Breite W2 verengt wird. Die lichte Weite der Öffnung der Klemmnut 56 ist gleich der Breite W abzüglich der Breite der Verdickung am Ende der Zunge 58 und hat somit den Wert W1 + W2. Dieser Wert ist kleiner als das Zweifache des Durchmessers der Drähte 20, 22. Wenn die beiden Drähte verschiedene Durchmesser haben, ist die lichte Weite kleiner als die Summe dieser Durchmesser.

Wenn bei festgehaltenem Drahtgitter 12 ein Zug auf das Stützelement 14 in Richtung der Vorderseite dieses Stützelements (nach rechts in Figur 2) ausgeübt wird, so bewegen sich die beiden Drähte 20 in Richtung auf die verengte Öffnung der Klemmnut 56, wie in Figur 2 gezeigt ist. Die beiden Drähte 20 und 22 werden durch die Verdickungen an den Enden der Rippen 52, 54 zusammengedrückt und drücken somit etwa gleichmäßig von beiden Seiten gegen die Zunge 58, so daß diese weder nach oben noch nach unten ausweichen kann. Folglich verkeilen sich die Drähte 20 in der Öffnung der Klemmnut 56, und das Stützelement 14 kann somit nicht von dem Drahtgitter abgerissen werden.

Nur wenn die Drähte 20, 22 nacheinander aus der Klemmnut herausgezogen werden, wie in Figur 3 illustriert ist, kann die Zunge 58 abwechselnd nach unten und oben ausweichen, so daß die Drähte 20, 22 nacheinander aus den verengten Öffnungen der Abteile 60, 62 austreten können. Auf diese Weise laßt sich die Rastverbindung zwischen dem Stützelement 14 und dem Drahtgitter 12 bei Bedarf mühelos lösen. Ebenso einfach läßt sich diese Rastverbindung bei der Montage herstellen, indem die Drähte nacheinander in die Klemmnut 56 eingedrückt werden.

Damit die Schächte 60, 62 der Klemmnut beim Spritzgießen des Stützelements 14 entformt werden können, ist das Stützelement 14 beiderseits der Zunge 58 durch Schlitze 64, 66 durchbrochen. Eine stabile, einstückige Verbindung zwischen der Zunge 58 und den übrigen Teilen des Stützelements 14 wird dadurch erreicht, daß die Zunge 58 in der Richtung senkrecht zur Zeichenebene in Figur 2 über die Enden der Schlitze 64, 66 hinaus verlängert ist.

Bei der Klemmstelle 48 gemäß Figur 2 sind die verdickten freien Enden der Rippen 52 und 54 in Richtung der Tiefe der Klemmnut 56 etwas gegeneinander versetzt. Ein solcher Versatz beeinträchtigt die Funktion der Befestigungseinrichtung nicht, solange gewährleistet ist, daß die Drähte 20, 22 sich in der verengten Öffnung der Klemmnut verkeilen. Sofern die Zunge 58 im Bereich Ihres freien Endes biegesteif ist, kann der Versatz zwischen den verdickten Enden der Rippen 52, 54 relativ groß sein. Im gezeigten Beispiel wird die Keilwirkung dadurch begünstigt, daß die Zunge 58 am freien Ende auf beiden Seiten mit wulstförmigen Verdickungen 58a und 58b versehen ist, die ihrerseits gegeneinander versetzt sind und somit in etwa den entsprechenden Verdickungen an den Rippen 52 und 54 gegenüberliegen.

Die Klemmstellen 50 am unteren Rand des Stützelements 14 haben im wesentlichen denselben Aufbau wie die Klemmstellen 48, und ihnen liegt dasselbe Funktionsprinzip zugrunde. Hier liegen allerdings die verdickten freien Enden der Rippen 52, 54 auf gleicher Höhe, und die am Ende verdickte Zunge 58 hat eine symmetrische Form.

Da sich die vertikalen Versteifungsrippen 38 des Stützelements unmittelbar an die obere Rippen 52 der Klemmstellen anschließen, wird eine hohe Verformungssteifheit dieser Rippen 52 erreicht.

## Patentansprüche

1. Vorrichtung zur Befestigung eines Stützelements (14) an einem Drahtgitter (12) eines Sitzes, mit Klemmnuten (56), in denen jeweils zumindest ein Draht (20, 22; 24,26) des Drahtgitters verrastet ist, dadurch **gekennzeichnet**, daß eine einzelne Klemmnut (56) zwei Drähte (20, 22; 24, 26) senkrecht zur Klemmnut (56) nebeneinander aufnimmt und daß die lichte Weite (W1 + W2) der Öffnung der Klemmnut kleiner ist als die Summe der Durchmesser der beiden Drähte.

2. Vorrichtung zur Befestigung eines Stützelements (14) an einem Drahtgitter (12) eines Sitzes, mit Klemmnuten (56), in denen jeweils zumindest ein Draht (20, 22; 24,26) des Drahtgitters verrastet ist, dadurch **gekennzeichnet**, daß eine einzelne Klemmnut durch eine parallel zu deren Längsrichtung verlaufende, vom Boden der Klemmnut aufragende elastische Zunge (58) in zwei Schächte (60, 62) unterteilt ist, die jeweils einen der Drähte (20, 22; 24, 26) aufnehmen, wobei die Drähte in der Klemmnut (56) nebeneinanderliegen, und daß die lichte Weite (W1 + W2) der Öffnung der Klemmnut (56) kleiner ist als die Summe der Durchmesser der beiden Drähte.

3. Vorrichtung nach Anspruch 2, dadurch **gekennzeichnet**, daß die Zunge (58) am freien Ende mindestens auf einer Seite mit einer wulstförmigen Verdickung (58a, 58b) versehen ist.

4. Vorrichtung nach einem der vorstehenden Ansprüche, dadurch **gekennzeichnet**, daß eine Klemmsteile (48; 50) für zwei Drähte (20, 22; 24, 26) jeweils durch zwei parallele, verformungssteife Rippen (52, 54) gebildet wird, die von dem Stützelement (14) vorspringen und die Klemmnut (56) begrenzen.

5. Vorrichtung nach den Ansprüchen 3 und 4, dadurch **gekennzeichnet**, daß die freien Enden der Rippen (52, 54) in Richtung der Tiefe der Klemmnut (56) gegeneinander versetzt sind und daß die wulstförmigen Verdickungen (58a, 58b) auf den entgegengesetzten Seiten der Zunge (58) in entsprechender Weise gegeneinander versetzt sind.

6. Vorrichtung nach einem der vorstehenden Ansprüche, dadurch **gekennzeichnet**, daß die beiden in derselben Klemmstelle (48; 50) gehaltenen Drähte (20, 22; 24, 26) mit ihren Enden in Abstand zueinander an parallelen Stäben (16) befestigt und in ihren Mittelabschnitten derartig elastisch verformt sind, daß sie unmittelbar nebeneinander durch eine oder mehrere Klemmstellen laufen.

7. Vorrichtung nach Anspruch 6, dadurch **gekennzeichnet**, daß das Stützelement an seinem oberen Rand und seinem unteren Rand jeweils mit midestens einer Klemmstelle (48; 50) für zwei Drähte (20, 22; 24, 26) versehen ist und außerdem an seinem oberen Rand und an seinem unteren Rand Mittel (40, 46) aufweist, die es gestatten, die oberen und unteren Ränder des Stützelements unter elastischer Verformung der Drähte (20, 22, 24, 26) zusammenzuziehen und dadurch das Stützelement in seinem Mittelbereich vorzuwölben.

## Claims

1. Device for attaching a support element (14) to a wire grating (12) of a seat, having clamping grooves (56) in each of which at least one wire (20, 22; 24, 26) of the wire grating is locked, characterised in that an individual clamping groove (56) accommodates two wires (20, 22; 24, 26) side by side perpendicularly to the clamping groove (56) and in that the inside width (W1 + W2) of the opening of the clamping groove is smaller than the sum of the diameters of the two wires.

2. Device for attaching a support element (14) to a wire grating (12) of a seat, having clamping grooves (56) in each of which at least one wire (20, 22; 24, 26) of the wire grating is locked, characterised in that an individual clamping groove is divided, by a resilient tongue (58) extending parallel to its longitudinal direction and projecting upwards from the base of the clamping groove, into two shafts (60, 62) which each accommodate one of the wires (20, 22; 24, 26), the wires lying side by side in the clamping groove (56), and in that the inside width (W1 + W2) of the opening of the clamping groove (56) is smaller than the sum of the diameters of the two wires.

3. Device according to claim 2, characterised in that the tongue (58) is provided, at the free end, at least on one side, with a bead-like thickened portion (58a, 58b).

4. Device according to any one of the preceding claims, characterised in that a clamping site (48; 50) for two wires (20, 22; 24, 26) is formed by two respective parallel ribs (52, 54) that rigidly resist deformation, project from the support element (14) and delimit the clamping groove (56).

5. Device according to claims 3 and 4, characterised in that the free ends of the ribs (52, 54) are offset relative to one another in the direction of the depth of the clamping groove (56) and in that the bead-like thickened portions (58a, 58b) are offset relative to one another in a corresponding manner on the opposite sides of the tongue (58).

6. Device according to any one of the preceding claims, characterised in that the two wires (20, 22; 24, 26) held in the same clamping site (48; 50) are attached, with their ends spaced from one another, to parallel rods (16) and are deformed resiliently in their central portions in such a manner that they extend directly side by side through one or more clamping sites.

7. Device according to claim 6, characterised in that the support element is provided, at its upper edge and its lower edge, with at least one respective clamping site (48; 50) for two wires (20, 22; 24, 26) and it also has, at its upper edge and at its lower edge, means (40, 46) which enable the upper and lower edges of the support element to be drawn together with resilient deformation of the wires (20, 22; 24, 26) and thereby the support element to be curved forwards in its central region.

## Revendications

1. Dispositif de fixation d'un élément de soutien (14) sur une grille métallique (12) d'un siège, comprenant des gorges de serrage (56), dans chacune desquelles est emboîté au moins un fil métallique (20, 22 ; 24, 26) de la grille métallique, caractérisé en ce que chaque gorge de serrage (56) reçoit deux fils métalliques (20, 22 ; 24, 26) disposés côte à côte perpendiculairement à la longueur de la gorge de serrage, et en ce que le diamètre intérieur (W1 + W2) de l'ouverture de la gorge de serrage est inférieur à la somme des diamètres des deux fils métalliques.

2. Dispositif de fixation d'un élément de soutien (14) sur une grille métallique (12) d'un siège, comprenant des gorges de serrage (56), dans chacune desquelles est emboîté au moins un fil métallique (20, 22 ; 24, 26) de la grille métallique, caractérisé en ce que chaque gorge de serrage est divisée, par une languette élastique (58) parallèle à sa direction longitudinale et partant du fond de la gorge de serrage, en deux logements (60, 62) qui reçoivent chacun un des fils métalliques (20, 22 ; 24, 26), les fils métalliques étant disposés côte à côte dans la gorge de serrage (56), et en ce que le diamètre intérieur (W1 + W2) de l'ouverture de la gorge de serrage (56) est inférieur à la somme des diamètres des deux fils métalliques.

3. Dispositif selon la revendication 2, caractérisé en ce qu'à son extrémité libre la languette (58) est munie, au moins sur un côté, d'un renflement (58a, 58b) en forme de bourrelet.

4. Dispositif selon une des revendications précédentes, caractérisé en ce que chaque point de serrage (48 ; 50) pour deux fils métalliques (20, 22 ; 24, 26) est formé par deux nervures parallèles indéformables (52, 54) qui débordent de l'élément de soutien (14) et délimitent la gorge de serrage (56).

5. Dispositif selon les revendications 3 et 4, caractérisé en ce que les extrémités libres des nervures (52, 54) sont décalées l'une par rapport à l'autre dans le sens de la profondeur de la gorge de serrage (56), et en ce que les renflements en forme de bourrelets (58a, 58b) disposés sur les côtés opposés de la languette (58) sont décalés l'un par rapport à l'autre de manière correspondante.

6. Dispositif selon une des revendications précédentes, caractérisé en ce que les deux fils métalliques (20, 22 ; 24, 26) maintenus dans le même point de serrage (48 ; 50) sont fixés par leurs extrémités, à distance l'un de l'autre, à des barres parallèles (16) et sont déformés élastiquement dans leur portion médiane, de façon à pouvoir passer dans un ou plusieurs points de serrage en étant directement accolés.

7. Dispositif selon la revendication 6, caractérisé en ce que, sur chacun de ses bords supérieur et inférieur, l'élément de soutien est muni d'au moins un point de serrage (48 ; 50) pour deux fils métalliques (20, 22 ; 24, 26) et comporte en outre, sur son bord supérieur et sur son bord inférieur, des moyens (40, 46) qui permettent de rapprocher les bords supérieur et inférieur de l'élément de soutien moyennant une déformation élastique des fils métalliques (20, 22, 24, 26) et ainsi de bomber l'élément de soutien dans sa zone médiane.
